(19) Europäisches Patentamt / European Patent Office / Office européen des brevets

(11) **EP 4 474 811 A1**

(12) **DEMANDE DE BREVET EUROPEEN**

(43) Date de publication:
**11.12.2024   Bulletin 2024/50**

(21) Numéro de dépôt: **24180515.9**

(22) Date de dépôt: **06.06.2024**

(51) Classification Internationale des Brevets (IPC):
**G01N 29/04** *(2006.01)*   **G01N 29/06** *(2006.01)*
**G01N 29/07** *(2006.01)*   **G01N 29/22** *(2006.01)*
**G01N 29/44** *(2006.01)*

(52) Classification Coopérative des Brevets (CPC):
**G01N 29/043; G01N 29/069; G01N 29/07; G01N 29/223; G01N 29/4472;** G01N 2291/0234; G01N 2291/0289; G01N 2291/103; G01N 2291/105; G01N 2291/2675

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **06.06.2023   FR 2305675**

(71) Demandeur: **Onet Technologies CN**
**13009 Marseille (FR)**

(72) Inventeur: **CENCE, Michel**
**13009 MARSEILLE (FR)**

(74) Mandataire: **Cabinet Beau de Loménie**
**158, rue de l'Université**
**75340 Paris Cedex 07 (FR)**

(54) **PROCÉDÉ ET DISPOSITIF DE CONTRÔLE ULTRASONORE NON DESTRUCTIF D'UNE PIÈCE MÉTALLIQUE OU D'UN CORDON DE SOUDURE**

(57)     L'invention a pour objet un procédé et un dispositif de contrôle ultrasonore non destructif d'une pièce métallique ou d'un cordon de soudure déposé dans un chanfrein formé entre deux pièces métalliques (8). Le dispositif (2) se déplace le long de la zone contrôlée (Z) et est composé d'au moins un traducteur émetteur (E1, E2) positionné d'un côté de la zone contrôlée et de deux traducteurs récepteurs (R1, R2) positionnés du côté opposé de la zone contrôlée. La position géométrique de chaque extrémité d'un défaut sur une vue en coupe de la zone contrôlée est déterminée par une intersection géométrique entre au moins deux ellipses comprenant une première ellipse associée à un premier groupe d'acquisition et dont les foyers correspondent à la position du traducteur émetteur et de l'un des deux traducteurs récepteurs, et une seconde ellipse associée à un second groupe d'acquisition et dont les foyers correspondent à la position du traducteur émetteur et de l'autre traducteur récepteur.

**FIG.1**

EP 4 474 811 A1

**Description**

Domaine Technique

La présente invention se rapporte au domaine général du contrôle ultrasonore non destructif. Elle vise plus précisément un procédé permettant d'examiner une pièce métallique ou un cordon de soudure déposé dans un chanfrein formé entre deux pièces métalliques dans le but de caractériser un éventuel défaut présent dans la zone contrôlée.

Technique antérieure

L'examen ultrasonore non destructif dit TOFD (pour « Time of Flight Diffraction » en anglais) est une technique de contrôle connue en soi. Son principe de détection repose sur le balayage d'une pièce à inspecter à l'aide d'un couple de traducteurs émetteur et récepteur fortement divergents qui sont montés en face à face sur la pièce, puis à visualiser sur une représentation graphique de type B-scan les échos de diffraction et de réflexion générés par les éventuels défauts dans la pièce inspectée.

Par rapport à un examen ultrasonore conventionnel ou radiographique, cette technique TOFD présente de nombreux avantages. En particulier, elle permet une grande sensibilité de détection avec une faible sensibilité à l'orientation des réflecteurs. De plus, cette technique présente une mise en oeuvre qui est aisée et peu exigeante en termes de compétences des opérateurs. Sa rapidité d'exécution et d'analyse et la précision de ses mesures sont également remarquables.

Toutefois, malgré ses nombreux avantages, la technique TOFD présente un certain nombre d'inconvénients qui freinent sa mise en oeuvre à l'échelle industrielle.

En effet, la haute sensibilité de détection du contrôle par technique TOFD peut conduire à relever des défauts non notables dans le cadre d'un examen ultrasonore conventionnel. En outre, sa mise en oeuvre peut se révéler complexe sur des matériaux à structure cristalline grossière et est limitée aux tôles et aux assemblages soudés entre eux. De plus, avec la technique TOFD, les zones de détection sont limitées à la proximité de la surface de la pièce contrôlée. Enfin, cette technique présente des problèmes de localisation du défaut en profondeur et par rapport à l'axe du dispositif TOFD (la localisation précise du défaut n'est possible qu'en ayant recours à un examen ultrasonore complémentaire ciblé au droit du réflecteur détecté).

On connaît également de la publication EP 2,605,009 une technique de contrôle ultrasonore hybride associant un traducteur émetteur ultrasonore multiéléments à un traducteur récepteur monolithique conventionnel fortement amorti. Par rapport à la technique TOFD, la méthode décrite dans cette publication permet d'améliorer la localisation et le dimensionnement des défauts. Toutefois, cette méthode présente l'inconvénient de nécessiter des coûts extrêmement élevés pour l'électronique de pilotage qui est à nécessaire à sa mise en oeuvre et du fait de la complexité de développement du logiciel d'analyse des données d'acquisition.

Exposé de l'invention

La présente invention a donc pour but principal de proposer un procédé de contrôle ultrasonore non destructif d'une pièce métallique ou d'un cordon de soudure qui ne présente pas les inconvénients précités.

Ce but est atteint grâce à un procédé de contrôle ultrasonore non destructif d'une pièce métallique ou d'un cordon de soudure déposé dans un chanfrein formé entre deux pièces métalliques, le procédé comprenant, à partir d'un dispositif d'acquisition se déplaçant le long de la zone contrôlée et composé d'au moins un traducteur émetteur positionné d'un côté de la zone contrôlée et de deux traducteurs récepteurs positionnés du côté opposé de la zone contrôlée :

-    l'émission par le traducteur émetteur d'ondes ultrasonores longitudinales en direction de la zone contrôlée, et la réception de données ultrasonores par chacun des deux traducteurs récepteurs de façon à former un premier et un second groupe d'acquisition distincts ;

-    la détermination de la position géométrique de deux extrémités d'un défaut sur une vue en coupe de la zone contrôlée à partir d'une représentation des données ultrasonores des deux groupes d'acquisition ;

-    et dans lequel, conformément à l'invention, la position géométrique de chaque extrémité du défaut est déterminée par une intersection géométrique entre au moins deux ellipses comprenant une première ellipse associée au premier groupe d'acquisition et dont les foyers correspondent à la position du traducteur émetteur et de l'un des deux traducteurs récepteurs, et une seconde ellipse associée au second groupe d'acquisition et dont les foyers correspondent à la position du traducteur émetteur et de l'autre traducteur récepteur.

Le procédé selon l'invention est remarquable en ce qu'il permet de caractériser un défaut dans la zone contrôlée par sa nature, son type, sa position, ses dimensions et son orientation, tout en s'affranchissant des limitations liées à la technique TOFD (notamment en termes de localisation des indications) et sans impacter les durées d'examen. En effet, les données ultrasonores recueillies par le procédé permettent la reconstruction des défauts sur une vue en coupe, et la quantification précise des paramètres de localisation et de dimensionnement, d'évaluation des ligaments résiduels, de hauteur et d'orientation des défauts.

Du fait de sa facilité de mise en oeuvre et de sa faible sensibilité à la dextérité des opérateurs, l'invention permet de se substituer efficacement aux examens ultrasonores manuels contractuels et aux examens ultrasonores complémentaires de caractérisation tout en garantissant un suivi en service précis des indications (enregistrement des données d'acquisition et de caractérisation).

En particulier, le procédé selon l'invention permet de localiser avec précision les composantes « tête » et « pied » du défaut. Ces localisations sont connues avec précision, ce qui permet de déterminer précisément la hauteur verticale du défaut, sa profondeur, et son orientation.

De préférence, l'équation géométrique de chacune des ellipses dans un repère (x,y) sur la vue en coupe de la zone contrôlée est donnée par : $(x^2/a^2) + (y^2/b^2) = 1$ ; dans laquelle :

- le demi grand axe « a » est fonction de :

    o la mesure du temps de vol de la composante d'une extrémité du défaut observé,
    o la mesure du temps de vol entre le transducteur émetteur et le transducteur récepteur considéré, et
    o la célérité ultrasonore dans la zone contrôlée

- le demi petit axe « b » est fonction du grand axe « a » et de la distance mesurée entre le transducteur émetteur et le transducteur récepteur considéré.

Dans ce cas, le demi grand axe « a » est donné par l'équation suivante :

[Math. 1]

$$a = \frac{(Tv - TvOL) \times C_{OL}}{2}$$

dans laquelle « Tv » est la mesure du temps de vol de la composante d'une extrémité choisie du défaut observé, « TvOL » est la mesure du temps de vol entre le transducteur émetteur et le transducteur récepteur considéré, et « $C_{OL}$ » est la célérité ultrasonore dans la zone contrôlée.

Toujours dans ce cas, le demi petit axe « b » est donné par l'équation suivante :

[Math. 2]

$$b = \sqrt{a^2 - c^2}$$

dans laquelle « a » est le demi grand axe et « c » est la demi distance focale de l'ellipse considérée.

Selon un mode de réalisation, le dispositif d'acquisition est composé de deux traducteurs émetteurs distincts et de deux traducteurs récepteurs distincts de façon à former quatre groupes d'acquisition distincts.

De préférence, le procédé comprend en outre la détermination des dimensions et de l'orientation du défaut observé sur la vue en coupe de la zone contrôlée à partir des positions géométriques des deux extrémités du défaut observé.

De préférence également, le traducteur émetteur émet des ondes longitudinales à une fréquence comprise entre 1 et 15 MHz.

L'invention a également pour objet un dispositif pour la mise en oeuvre du procédé tel que défini précédemment, comprenant au moins un traducteur émetteur destiné à être positionné d'un côté de la zone contrôlée observé et deux traducteurs récepteurs destinés à être positionnés du côté opposé de la zone contrôlée, les traducteurs étant montés sur une même tige se déplaçant le long du chanfrein.

Le dispositif peut comprendre deux traducteurs émetteurs distincts et de deux traducteurs récepteurs distincts.

Brève description des dessins

[Fig. 1] La figure 1 est une vue schématique d'un exemple de dispositif pour la mise en oeuvre du procédé de contrôle ultrasonore non destructif selon l'invention.

[Fig. 2] La figure 2 est une illustration du principe de mise en oeuvre du procédé de contrôle ultrasonore non destructif selon l'invention.

[Fig. 3] La figure 3 illustre de façon schématique un exemple de mise en oeuvre du procédé selon l'invention à deux groupes d'acquisition.

[Fig. 4] La figure 4 illustre de façon schématique un autre exemple de mise en oeuvre du procédé selon l'invention à quatre groupes d'acquisition.

[Fig. 5] La figure 5 illustre de façon schématique un exemple de caractérisation d'un défaut au moyen du procédé selon l'invention à quatre groupes d'acquisition.

Description des modes de réalisation

L'invention est relative à une solution d'examen non destructif par ultrasons permettant de se substituer aux examens ultrasonores manuels contractuels et aux examens ultrasonores complémentaires de caractérisation tout en garantissant un suivi en service précis des indications détectées.

Cette solution s'applique à l'examen volumique ultrasonore du volume soudé et de la zone affectée thermiquement de métal de base d'assemblages soudés bout à bout de tôles forgées en acier faiblement allié. Elle s'applique également à l'examen volumique ultrasonore du métal de base de tôles forgées en acier faiblement allié ou austénitique, et encore à l'examen volumique ultrasonore de soudures d'implantation de piquages ou d'assemblages tube/accessoires lorsque la géométrie de l'assemblage et la localisation de la zone surveillée le permet.

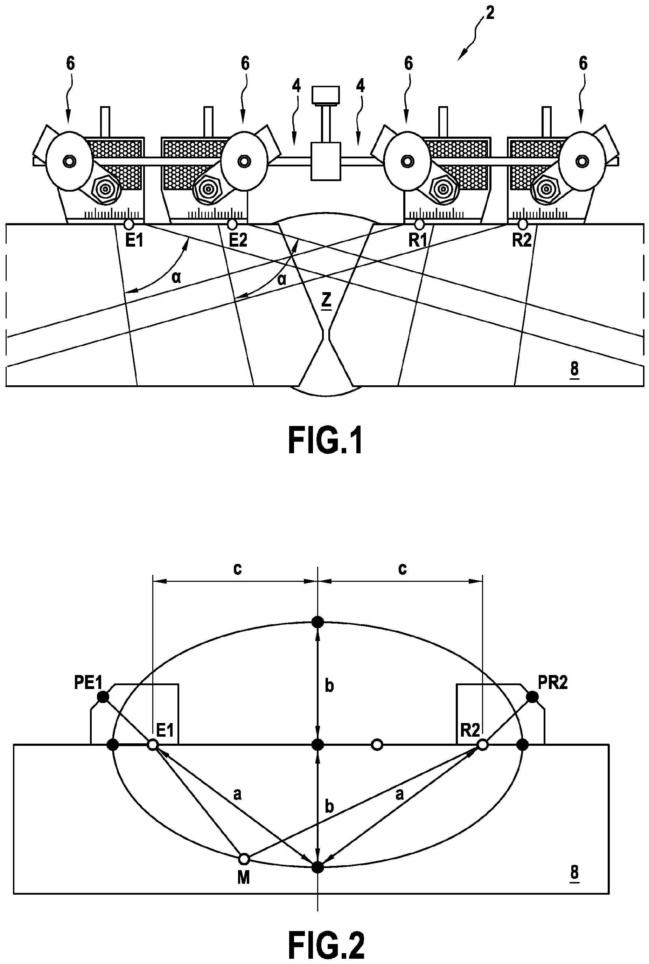

Cette solution est mise en oeuvre notamment grâce à un dispositif de contrôle ultrasonore non destructif tel que celui représenté sur la figure 1.

Ce dispositif 2 comprend un ensemble de trois ou quatre traducteurs à haute sensibilité et très fortement amortis.

Pour rappel, un traducteur est un dispositif électroacoustique comprenant généralement un ou plusieurs transducteurs destinés à l'émission ou à la réception d'ondes ultrasonores. Un transducteur est quant à lui un élément actif d'un traducteur permettant de convertir l'énergie électrique en énergie acoustique (et réciproquement).

Plus précisément, le dispositif 2 selon l'invention comprend, sur l'exemple de réalisation de la figure 1, deux traducteurs émetteurs E1, E2, et deux traducteurs récepteurs R1, R2.

Ce mode de réalisation du dispositif de la figure 1 est relatif à une configuration à quatre groupes d'acquisition. Dans un autre mode de réalisation, le dispositif comprend deux groupes d'acquisition constitués à partir d'un unique traducteur émetteur E1 et de deux traducteurs récepteurs R1, R2.

Les traducteurs émetteurs E1, E2 sont conçus pour générer des ondes longitudinales d'angle de réfraction $\alpha$ dans l'acier faiblement allié égal à 35, 45, 60 ou 70°. Leur fréquence d'émission est avantageusement comprise entre 1 et 15MHz.

Les traducteurs E1, E2, R1, R2 sont solidarisés par un système de tringlerie constitué de deux tiges 4 en acier inoxydable permettant de garantir leur alignement et de molettes de serrage 6 permettant de fixer les traducteurs sur la tringlerie et de régler les distances E1-R1, E2-R2, E2-R1 et E1-R2.

En pratique, les traducteurs E1, E2, R1, R2 sont positionnés sur une même face de la pièce à contrôler 8 de part et d'autre de la zone à contrôler Z (les traducteurs émetteurs étant positionnés d'un même côté de la zone à contrôler et les traducteurs récepteurs étant positionnés de l'autre côté). Par exemple, comme représenté sur la figure 1, la zone à contrôler Z peut être un cordon de soudure déposé dans un chanfrein formé entre deux pièces métalliques.

Les traducteurs E1, E2, R1, R2 sont alors déplacés le long de la zone à contrôler dans un mouvement de balayage (en va et vient).

Le dispositif selon l'invention comprend également un système de traitement informatique (non représenté sur les figures) des données ultrasonores collectées. Typiquement, ce système de traitement se compose d'une électronique d'acquisition spécifique, d'un ordinateur tactile à écran haute définition, d'un logiciel d'acquisition spécifique, et d'un logiciel d'analyse spécifique.

L'électronique d'acquisition de ce système de traitement informatique permet de piloter le dispositif de sorte à récupérer les données ultrasonores de chaque traducteur émetteur E1, E2 vers chacune des traducteurs récepteurs R1, R2.

L'ordinateur du système de traitement informatique possède une puissance de calcul suffisante pour permettre de traiter les signaux encodés provenant des différents groupes d'acquisition. La résolution de son écran sera suffisante pour permettre la visualisation de l'ensemble des vues en coupe (dites « B-scan »).

Le logiciel d'acquisition spécifique a été développé pour permettre à l'opérateur de paramétrer le dispositif (par le réglage de la célérité ultrasonore, de la célérité ultrasonore, de la fréquence des traducteurs, etc., mais aussi par la définition du nombre de groupes d'acquisition, par le réglage de la position des traducteurs, etc.).

Le logiciel d'acquisition spécifique se présente sous la forme d'une solution logicielle qui s'articule autour d'une application de type Desktop qui interagit avec l'opérateur par le biais d'un environnement graphique (IHM). Il collecte les données d'ultrasons issues de la carte d'acquisition via une librairie native fournie par le fabricant. Les données collectées sont organisées et stockées dans une base de données fixe de type SQLite.

Le logiciel d'analyse spécifique a été développé pour permettre de relire les données d'acquisition et de déterminer la position, l'orientation et les dimensions précises des défauts sur une vue en coupe de la pièce contrôlée (avec une représentation du chanfrein dans le cas d'un assemblage soudé).

L'opérateur utilisera trois curseurs localisés en X-Y sur la vue en coupe B-scan de chaque groupe d'acquisitions (avec « X » la position du couple de traducteurs émetteur/récepteur sur la pièce et « Y » le temps de vol), à savoir :

Un curseur OL pour la mesure du temps de vol de l'onde latérale se propageant en ligne droite entre les points d'émergence E1 et R2.

Un curseur S pour la mesure du temps de vol TvS de la composante « tête » (ou sommet) du défaut observé.

Un curseur P pour la mesure du temps de vol TvP de la composante « pied » du défaut observé.

Comme représenté sur la figure 2, on considère par : TvOL le temps de vol entre la pastille émettrice PE1 et la pastille réceptrice PR2 mesuré sur la vue en coupe B-scan du logiciel d'analyse à l'aide du curseur OL, et par TvS ou TvP les temps de vol PE1-M-PR2 mesurés sur la vue en coupe B-scan du logiciel d'analyse à l'aide des curseurs S ou P en fonction de la composante étudiée du défaut (à savoir tête ou pied).

Sachant que l'équation géométrique d'une ellipse dans un repère (x,y) sur la vue en coupe B-scan de la zone contrôlée est donnée par l'équation générale :

[Math. 3]

$$\frac{x^2}{a^2} + \frac{y^2}{b^2} = 1$$

Dans cette équation, « a » correspond au demi grand axe de l'ellipse, et « b » correspond au demi petit axe de l'ellipse.

Il est alors possible de tracer deux ellipses (l'une relative à la composante « tête » du défaut, et l'autre relative à sa composante « pied ») dont les foyers correspondent à la position du traducteur émetteur E1 et de l'un des deux traducteurs récepteurs (sur l'exemple de la figure 2 il s'agit du traducteur récepteur R2).

L'ellipse relative à la composante « tête » du défaut est tracée grâce à l'équation ci-dessus avec la valeur pour le demi grand axe « a » donnée par l'équation ci-après :

[Math. 4]

$$a = \frac{(TvS - TvOL) \times C_{OL}}{2}$$

Dans laquelle « TvS » est le temps de vol PE1-M-PR2 mesuré sur la vue en coupe B-scan du logiciel d'analyse à l'aide du curseur S, et « $C_{OL}$ » est la célérité ultrasonore dans la zone contrôlée.

Quant à la valeur du demi petit axe « b » de l'ellipse, elle est donnée par l'équation ci-après :

**[Math. 5]**

$$b = \sqrt{a^2 - c^2}$$

Dans laquelle « a » correspond au demi grand axe de l'ellipse, et « c » correspond à la demi distance focale de l'ellipse, à savoir à la moitié de la distance mesurée physiquement entre le traducteur émetteur E1 et le traducteur récepteur R2 (dans l'exemple de la figure 2).

L'ellipse relative à la composante « pied » du défaut est quant à elle tracée grâce à l'équation ci-dessus avec la valeur pour le demi grand axe « a » donnée par l'équation ci-après :

**[Math. 6]**

$$a = \frac{(TvP - TvOL) \times C_{OL}}{2}$$

Dans laquelle « TvP » est le temps de vol PE1-M-PR2 mesuré sur la vue en coupe B-scan du logiciel d'analyse à l'aide du curseur P, et « $C_{OL}$ » est la célérité ultrasonore dans la zone contrôlée. Quant à la valeur du demi petit axe « b » de l'ellipse, elle est donnée par l'équation 5 ci-dessus.

Ainsi, dans le cas d'un dispositif d'acquisition à deux groupes d'acquisition (à savoir un seul traducteur émetteur E1 et deux traducteurs récepteurs R1, R2), les mesures de temps de vol réalisés avec les curseurs OL, S et P permettent de tracer deux ellipses ε1, ε2 distinctes pour chacune des composantes étudiées du défaut (à savoir tête ou pied).

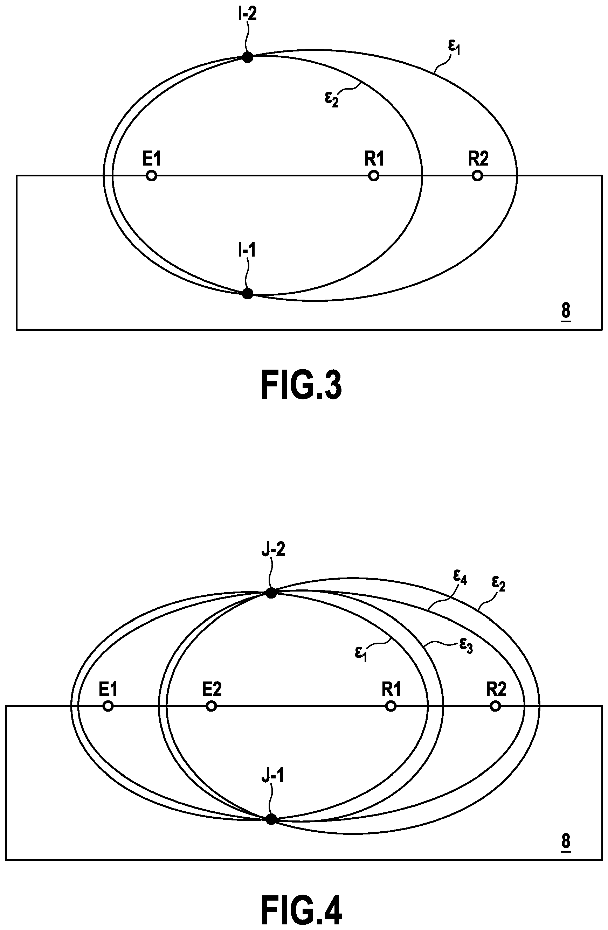

La figure 3 représente un tel exemple à deux groupes d'acquisition.

Sur cet exemple, l'ellipse ε1 a été tracée en considérant la composante « tête » du défaut (voir équation 4 ci-dessus) et à partir du groupe d'acquisition formé par le traducteur émetteur E1 et le traducteur récepteur R2. Toujours sur cet exemple, l'ellipse ε2 a été tracée à partir du groupe d'acquisition formé par le traducteur émetteur E1 et le traducteur récepteur R1 (toujours en considérant la composante « tête » du défaut).

Les deux ellipses ε1, ε2 ont deux points d'intersection, à savoir un premier point I-1 positionné à l'intérieur de la pièce à contrôler 8, et un second point I-2 positionné à l'extérieur de celle-ci.

Le point d'intersection I-1 positionné à l'intérieur de la pièce à contrôler 8 correspond ainsi à la position de la tête du défaut.

Le même tracé de deux ellipses est effectué pour la composante « pied » du défaut (voir équation 6 ci-dessus).

Dans le cas d'un dispositif d'acquisition à quatre groupes d'acquisition (à savoir deux traducteurs émetteurs E1, E2 et deux traducteurs récepteurs R1, R2), les mesures de temps de vol réalisés avec les curseurs OL, S et P permettent de tracer pour chacune des composantes étudiées du défaut (à savoir tête ou pied) entre deux et quatre ellipses ε1 à ε4 distinctes en fonction des groupes d'acquisition retenus (à savoir les groupes suivants : E1-R1, E2-R2, E2-R1, et E1-R2).

Par rapport à seulement deux groupes d'acquisition, le recours à quatre groupes d'acquisition présente l'avantage de minimiser l'impact des erreurs de mesure de temps de vol des différentes ellipses, et ainsi atteindre une plus grande précision de localisation du défaut.

La figure 4 représente un tel exemple à quatre groupes d'acquisition dans lequel quatre ellipses ε1 à ε4 sont tracées pour la composante « tête » du défaut, à savoir une ellipse ε1 pour le groupe d'acquisition E1-R1, une ellipse ε2 pour le groupe d'acquisition E2-R2, une ellipse ε3 pour le groupe d'acquisition E2-E1 et une ellipse ε4 pour le groupe d'acquisition E1-R2.

Comme le montre la figure 4, ces quatre ellipses ε1 à ε4 ont deux points d'intersection, à savoir un premier point J-1 positionné à l'intérieur de la pièce à contrôler 8, et un second point J-2 positionné à l'extérieur de celle-ci.

Le point d'intersection J-1 positionné à l'intérieur de la pièce à contrôler 8 correspond à la position de la tête du défaut.

Le même tracé de quatre ellipses est effectué pour la composante « pied » du défaut (voir équation 6 ci-dessus).

On notera que lorsque la localisation de la composante du défaut est réalisée en considérant plus de deux ellipses (comme dans l'exemple de la figure 4), les points d'intersection des différentes ellipses peuvent, du fait des incertitudes de mesures de temps de vol, ne pas être parfaitement coïncidents. Dans ce cas, on retiendra le barycentre des points d'intersection identifiés.

Une fois identifiées la position du pied et la position du sommet du défaut, les dimensions et l'orientation du défaut observé sur la vue en coupe de la zone contrôlée peuvent être aisément définis en reliant les positions pied et sommet du défaut.

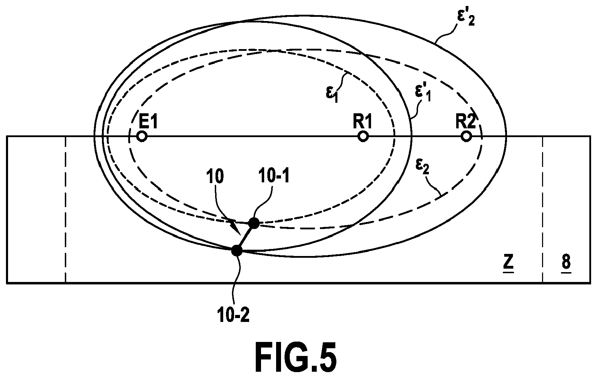

La figure 5 représente ainsi un exemple de mise en oeuvre de ce procédé pour caractériser un défaut 10 observé dans une zone de contrôle Z d'une pièce à contrôler 8.

Dans cet exemple, le dispositif d'acquisition est à deux groupes d'acquisition (à savoir avec un seul traducteur émetteur E1 pour deux traducteurs récepteurs R1, R2).

Sur cette figure, on a déterminé et tracé deux ellipses ε1, ε2 en considérant la composante « tête » du défaut (l'ellipse ε1 est relative au groupe d'acquisition E1-R1, tandis que l'ellipse ε2 est relative au groupe d'acquisition E1-R2). L'intersection de ces deux ellipses ε1, ε2 a permis de déterminer la position de la tête 10-1 du défaut 10.

De même, on a déterminé et tracé deux ellipses ε'1, ε'2 en considérant la composante « pied » du défaut (l'ellipse ε'1 est relative au groupe d'acquisition E1-R1, tandis que l'ellipse ε'2 est relative au groupe d'acquisition E1-R2). L'intersection de ces deux ellipses ε'1, ε'2 a permis de déterminer la position du pied 10-2 du défaut 10.

En reliant les points 10-1 et 10-2 entre eux, il est alors possible d'obtenir les dimensions et l'orientation du défaut 10 observé sur la vue en coupe de la zone contrôlée Z.

**Revendications**

1. Procédé de contrôle ultrasonore non destructif d'une pièce métallique ou d'un cordon de soudure déposé dans un chanfrein formé entre deux pièces métalliques, le procédé comprenant, à partir d'un dispositif d'acquisition (2) se déplaçant le long de la zone contrôlée (Z) et composé de deux traducteurs émetteurs (E1, E2) positionnés d'un côté de la zone contrôlée (Z) et de deux traducteurs récepteurs (R1, R2) positionnés du côté opposé de la zone contrôlée :

   - l'émission par les traducteurs émetteurs d'ondes ultrasonores longitudinales en direction de la zone contrôlée, et la réception de données ultrasonores par chacun des deux traducteurs récepteurs de façon à former quatre groupes d'acquisition distincts,
   - la détermination de la position géométrique de deux extrémités (10-1, 10-2) d'un défaut (10) sur une vue en coupe de la zone contrôlée à partir d'une représentation des données ultrasonores des quatre groupes d'acquisition,
   - **caractérisé en ce que** la position géométrique de chaque extrémité (10-1, 10-2) du défaut (10) est déterminée par une intersection géométrique entre quatre ellipses (ε1 à ε4) comprenant une première ellipse associée à un premier groupe d'acquisition et dont les foyers correspondent à la position d'un premier traducteur émetteur et d'un premier traducteur récepteur, une seconde ellipse associée à un second groupe d'acquisition et dont les foyers correspondent à la position du premier traducteur émetteur et du second traducteur récepteur, une troisième ellipse associée à un troisième groupe d'acquisition et dont les foyers correspondent à la position d'un second traducteur émetteur et du premier traducteur récepteur, et une quatrième ellipse associée à un quatrième groupe d'acquisition et dont les foyers correspondent à la position du second traducteur émetteur et du second traducteur récepteur.

2. Procédé selon la revendication 1, dans lequel l'équation géométrique de chacune des ellipses (ε1 à ε4) dans un repère (x,y) sur la vue en coupe de la zone contrôlée est donnée par : $(x^2/a^2) + (y^2/b^2) = 1$ ; dans laquelle :

   - le demi grand axe « a » est fonction de :

      o la mesure du temps de vol de la composante d'une extrémité du défaut observé,
      o la mesure du temps de vol entre le transducteur émetteur et le transducteur récepteur considéré, et
      o la célérité ultrasonore dans la zone contrôlée

   - le demi petit axe « b » est fonction du grand axe « a » et de la distance mesurée entre le transducteur émetteur et le transducteur récepteur considéré.

3. Procédé selon la revendication 2, dans lequel le demi grand axe « a » est donné par l'équation suivante :

[Math. 7]

$$a = \frac{(Tv - TvOL) \times C_{OL}}{2}$$

dans laquelle « Tv » est la mesure du temps de vol de la composante d'une extrémité choisie du défaut observé, « TvOL » est la mesure du temps de vol entre le transducteur émetteur et le transducteur récepteur considéré, et « C$_{OL}$ » est la célérité ultrasonore dans la zone contrôlée.

4. Procédé selon l'une des revendications 2 et 3, dans lequel le demi petit axe « b » est donné par l'équation suivante :

[Math. 8]

$$b = \sqrt{a^2 - c^2}$$

dans laquelle « a » est le demi grand axe et « c » est la demi distance focale de l'ellipse considérée.

5. Procédé selon l'une quelconque des revendications 1 à 4, comprenant en outre la détermination des dimensions et de l'orientation du défaut (10) observé sur la vue en coupe de la zone contrôlée à partir des positions géométriques des deux extrémités du défaut observé.

6. Procédé selon l'une quelconque des revendications 1 à 5, dans lequel les traducteurs émetteurs émettent des ondes longitudinales à une fréquence comprise entre 1 et 15 MHz.

7. Dispositif pour la mise en oeuvre du procédé selon l'une quelconque des revendications 1 à 6, comprenant deux traducteurs émetteurs distincts destinés à être positionnés d'un côté de la zone contrôlée observé, et deux traducteurs récepteurs distincts destinés à être positionnés du côté opposé de la zone contrôlée, les traducteurs étant montés sur une même tige se déplaçant le long du chanfrein.

FIG.1

FIG.2

FIG.3

FIG.4

**FIG.5**

Europäisches
Patentamt

European
Patent Office

Office européen
des brevets

**RAPPORT DE RECHERCHE EUROPEENNE**

Numéro de la demande

EP 24 18 0515

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 101 701 937 A (UNIV HARBIN ENG) 5 mai 2010 (2010-05-05) | 1-5 | INV. G01N29/04 |
| Y | * le document en entier * | 6,7 | G01N29/06 G01N29/07 |
| Y | Al-Ataby A ET AL: "NDT 2010 Conference Topics", , 1 janvier 2010 (2010-01-01), pages 1-11, XP093126946, Extrait de l'Internet: URL:https://www.bindt.org/downloads/4a2.pdf [extrait le 2024-02-02] * page 4 * | 6 | G01N29/22 G01N29/44 |
| X | WO 03/106994 A1 (AIR LIQUIDE [FR]; CENCE MARIO [FR] ET AL.) 24 décembre 2003 (2003-12-24) | 7 | |
| Y | * page 5; revendication 1; figures 1-6, 10 * | 7 | |
| A | CN 103 940 906 A (STATE GRID CORP CHINA ET AL.) 23 juillet 2014 (2014-07-23) * le document en entier * | 1-7 | DOMAINES TECHNIQUES RECHERCHES (IPC) G01N |
| A | CN 210 742 195 U (CLP HUACHUANG SUZHOU POWER TECH RESEARCH CO LTD ET AL.) 12 juin 2020 (2020-06-12) * le document en entier * | 1-7 | |
| A | GB 2 198 532 A (ATOMIC ENERGY AUTHORITY UK) 15 juin 1988 (1988-06-15) * le document en entier * | 1-7 | |

Le présent rapport a été établi pour toutes les revendications

| Lieu de la recherche | Date d'achèvement de la recherche | Examinateur |
|---|---|---|
| Munich | 25 octobre 2024 | Roetsch, Patrice |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 18 0515

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-10-2024

| Document brevet cité au rapport de recherche | | Date de publication | Membre(s) de la famille de brevet(s) | | Date de publication |
|---|---|---|---|---|---|
| CN 101701937 | A | 05-05-2010 | AUCUN | | |
| WO 03106994 | A1 | 24-12-2003 | AU | 2003263235 A1 | 31-12-2003 |
| | | | EP | 1516178 A1 | 23-03-2005 |
| | | | FR | 2840991 A1 | 19-12-2003 |
| | | | US | 2005223807 A1 | 13-10-2005 |
| | | | WO | 03106994 A1 | 24-12-2003 |
| CN 103940906 | A | 23-07-2014 | AUCUN | | |
| CN 210742195 | U | 12-06-2020 | AUCUN | | |
| GB 2198532 | A | 15-06-1988 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- EP 2605009 A